**Europäisches Patentamt**

(19) **European Patent Office**

**Office européen des brevets**

(11) Veröffentlichungsnummer: **0 007 472**
**B1**

(12) **EUROPÄISCHE PATENTSCHRIFT**

(45) Veröffentlichungstag der Patentschrift:
02.06.82

(21) Anmeldenummer: **79102227.0**

(22) Anmeldetag: **02.07.79**

(51) Int. Cl.³: **H 01 B 13/02**, D 07 B 7/02

(54) Vorrichtung zum SZ-Verseilen von Verseilelementen elektrischer oder optischer Kabel und Leitungen.

(30) Priorität: **28.07.78 DE 2833701**
**28.07.78 DE 2833698**

(43) Veröffentlichungstag der Anmeldung:
**06.02.80 Patentblatt 80/3**

(45) Bekanntmachung des Hinweises auf die Patenterteilung:
**02.06.82 Patentblatt 82/22**

(84) Benannte Vertragsstaaten:
**CH FR GB IT SE**

(56) Entgegenhaltungen:
**DE-B-1 765 452**
**FR-A-1 390 922**
**FR-A-2 013 504**.
**FR-A-2 344 656**
**FR-A-2 359 932**

(73) Patentinhaber: **SIEMENS AKTIENGESELLSCHAFT**
**Berlin und München, Postfach 22 02 61,**
**D-8000 München 22 (DE)**

(72) Erfinder: **Vogelsberg, Dieter, Fichtestrasse 7,**
**D-8630 Coburg (DE)**
Erfinder: **Koch, Klaus, Belfaster Strasse 54,**
**D-1000 Berlin 65 (DE)**

## Vorrichtung zum SZ-Verseilen von Verseilelementen elektrischer oder optischer Kabel und Leitungen

Die Erfindung liegt auf dem Gebiet der SZ-Verseilung von Verseilelementen elektrischer oder optischer Kabel und Leitungen und behandelt die konstruktive Ausgestaltung entsprechender Verseilwerkzeuge im Hinblick auf möglichst geringe rotierende Massen sowie mit Blick auf die räumliche Ausdehnung der Umkehrstellen der Drallrichtung im SZ-verseilten Verseilgut.

Zur SZ-Verseilung elektrischer Kabel und Leitungen können Vorrichtungen verwendet werden, die aus einer ersten und einer zweiten Torsionssperre bzw. einem Verseilpunkt oder Verseilnippel und wenigstens einem zwischen den Torsionssperren angeordneten Verseilkopf bestehen und denen die zu verseilenden Verseilelemente von raumfest angeordneten Vorratseinrichtungen zugeführt werden und denen im übrigen eine Abzug- und Aufwickelvorrichtung zugeordnet ist. Die SZ-Verseilung bietet den Vorteil, daß sie mit anderen Arbeitsgängen kombiniert werden kann, beispielsweise mit der Extrusion der Aderisolierung, mit der Verseilung mehrerer SZ-verseilter Verseileinheiten oder mit der Extrusion einer äußeren Umhüllung.

Die bisher zur SZ-Verseilung eingesetzten Werkzeuge bestehen in aller Regel aus um die Verseilachse rotierenden Verseilköpfen, die das Verseilgut von außen in Umfangsrichtung kraftschlüssig erfassen. Dabei wird entweder die Drehbewegung der Verseilköpfe in Abständen geändert (DE-OS 1 515 730, DE-AS 1 765 452, DE-AS 2 230 972) oder es wird der Abstand der Verseilköpfe und/oder der Torsionssperren bzw. Verseilnippel zueinander kontinuierlich abwechselnd vergrößert und verkleinert (DE-AS 2 138 239, DE-AS 2 232 329).

Bei einer hiervon abweichenden bekannten Vorrichtung zur SZ-Verseilung von Verseilelementen elektrischer Kabel wird als Verseilwerkzeug bzw. als Teil eines Verseilwerkzeugs ein Rollenpaar verwendet, das bezüglich der Verseilachse stillsteht. Die angetriebenen Rollen sind beiderseits des geradlinig und an den Rollen tangential geführten Verseilgutes angeordnet und üben infolge einer Schrägstellung ihrer Achsen gegenüber der Achse des Verseilgutes sowohl eine Längs- als auch eine Drehbewegung auf das Verseilgut aus. Zum Zwecke der SZ-Verseilung mehrerer Adern kann die Schrägstellung der Rollenachsen gewechselt werden, d. h., der zwischen den sich kreuzenden Rollenachsen eingeschlossene Winkel wechselt sein Vorzeichen (DE-OS 2 508 385). Bei einer anderen bekannten gleichartig wirkenden SZ-Verseilvorrichtung werden anstelle der angetriebenen Rollen angetriebene Raupenbänder verwendet (US-PS 3 659 407). Bei diesen bekannten Vorrichtungen ergibt sich die Schwierigkeit, daß während der SZ-Vortorsion bzw. der SZ-Verseilung Umkehrstellen der Drallrichtung bzw. der Torsionsrichtung auftreten, die sich unter dem Einfluß von Zugspannungen leicht aufseilen können. Im übrigen besteht bei der Verseilung mehrerer Verseilelemente die Gefahr, daß sich die einzelnen Verseilelemente an den Umkehrstellen der Drallrichtung einfach parallel zwischen die Walzenpaare legen und auf diese Weise nur hin und her verschoben werden, ohne daß sich der beabsichtigte Verseileffekt ergibt.

An sich sind im übrigen Verseilmaschinen bekannt, bei denen die Verseilelemente mit Hilfe eines Verseilbügels im Doppelschlag verseilt werden und bei denen das Verseilgut innerhalb des Verseilbügels mit einer Einrichtung um einen Winkel von etwa 180° umgelenkt wird, die aus mehreren im Zuge des Verseilbügels hintereinander angeordneten, gegenüber der Führungsachse des Verseilgutes schräggestellten Rollen oder Rollenpaaren besteht (DE-AS 1 510 091). Ähnliche Umlenkeinrichtungen können dazu verwendet werden, um in Verseilmaschinen, bei denen die Verseilelemente während der Zuführung zum Verseilnippel rückgedreht werden, zu gewährleisten, daß sich die Rückdrehung auch über eine für die Verseilelemente vorgesehene Umlenkeinrichtung bis in den Verseilnippel fortpflanzen kann (DE-AS 1 510 136 = US-PS 3 196 601, DE-OS 2 734 398).

Der Erfindung liegt die Aufgabe zugrunde, zur SZ-Verseilung von Verseilelementen elektrischer oder optischer Kabel und Leitungen eine Vorrichtung zu schaffen, die keine um die Verseilachse rotierenden Teile aufweist, die konstruktiv einfach aufgebaut ist und die gewährleistet, daß sich möglichst kurze Umkehrstellen der Drallrichtung im behandelten Verseilgut ergeben.

Zur Lösung dieser Aufgabe geht die Erfindung von einer Vorrichtung aus (DE-B-1 765 452), die aus raumfest angeordneten Vorratseinrichtungen für die Verseilelemente, aus einer Verseileinrichtung und aus einer Abzug- und Aufwickeleinrichtung besteht und bei der als Verseileinrichtung eine Verseilstrecke vorgesehen ist, die aus einem ersten und einem zweiten Verseilpunkt oder Verseilnippel und wenigstens einem zwischen den beiden Verseilpunkten angeordneten Verseilkopf besteht, der die zu einem Strang zusammengefaßten Verseilelemente erfaßt und verdreht. Gemäß der Erfindung ist vorgesehen, daß der Verseilkopf aus wenigstens einer um ihre Achse drehbaren Umlenkrolle oder Umlenkwalze besteht, die in Umfangsrichtung des Verseilgutes nicht rotiert und an der das Verseilgut wenigstens über einen Teil des Umfangs anliegt und deren Achse gegenüber der Achse des gestreckt geführten Verseilgutes schräggestellt ist und mit dieser einen spitzen Winkel einschließt, und daß entweder die Schrägstellung der Achse der Umlenkrolle oder der Umlenkwalze in einem Winkelbereich von 0 bis 90° in Abständen änderbar ist oder daß die örtliche Lage der Umlenkrolle oder Umlenkwalze zum Verseilgut bzw. die örtliche Lage des Verseilgutes zur Umlenkrolle oder Umlenkwalze in oder quer zur Führungsachse des Verseilgutes abschnittsweise änderbar ist.

Bei einer derart ausgebildeten SZ-Verseilvorrichtung wird der notwendige Kraftschluß zwischen dem Verseilgut und dem Verseilwerkzeug aus der auf das Verseilgut ausgeübten Zugkraft und aus wenigstens einer Umlenkung des Verseilgutes gewonnen. Durch die Schrägstellung des Verseilwerkzeugs gegenüber der Führungsachse des Verseilgutes wird auf dieses eine Kraftkomponente in tangentialer Richtung ausgeübt, die zur Verseilung des Verseilgutes führt. Für die Erfindung ist dabei wesentlich, daß die tangentiale Kraftkomponente — gegebenenfalls gemeinsam mit einer axialen Kraftkomponente — in Abständen änderbar ist; aus der abschnittsweise wechselnden tangentialen Kraftkomponente ergibt sich dann die resultierende SZ-Verseilung des Verseilgutes. Weiterhin ist wesentlich, daß die tangentiale Kraftkomponente nur in ihrer Amplitude, nicht aber auch in ihrer Richtung änderbar ist; hierdurch wird sichergestellt, daß das Verseilgut im Bereich der Verseilstrecke mit stets gleichbleibender Richtung verseilt ist, so daß die Umkehrstellen der Drallrichtung erst am Ausgang der Verseilstrecke, also beim Durchlaufen des zweiten Verseilpunktes, gebildet werden. Im Bereich der Verseilstrecke ergeben sich somit im Verseilgut nur Abschnitte, in denen die Verseilschlaglänge ihre Größe, nicht jedoch ihre Richtung wechselt. Derartige Abschnitte neigen unter dem Einfluß von Zugspannungen sehr viel weniger zum Aufdrallen.

Dadurch, daß die tangentiale Kraftkomponente nur in ihrer Amplitude, nicht aber auch in ihrer Richtung änderbar ist, wird weiterhin gewährleistet, daß das Verseilgut in das Verseilwerkzeug stets verseilt einläuft, so daß die tangential vom Verseilwerkzeug ausgeübten Kräfte bereits auf einen bestehenden Verseilverband einwirken. Dadurch wird verhindert, daß sich die Verseilelemente des Verseilgutes auf der oder den Umlenkrollen oder Umlenkwalzen des Verseilwerkzeugs parallel legen und durch die tangentiale Kraftkomponente nur axial auf den Umlenkrollen oder Umlenkwalzen verschoben werden.

Die Änderung der tangentialen Kraftkomponente des Verseilwerkzeugs kann entweder durch eine Veränderung der Schrägstellung der Achse der Umlenkrolle oder Umlenkwalze des Verseilwerkzeugs oder durch eine Änderung der örtlichen Lage der Umlenkrolle oder Umlenkwalze zum Verseilgut bzw. der örtlichen Lage des Verseilgutes zur Umlenkrolle oder Umlenkwalze erfolgen. Die Änderung der örtlichen Lage kann hierbei entweder eine axiale Verschiebung der Umlenkrolle oder Umlenkwalze sein, bei der das Verseilgut in seiner örtlichen Position durch entsprechende Führungsnippel fixiert wird, oder umgekehrt eine seitliche Verschiebung des Verseilgutes mit Hilfe entsprechender Führungsnippel; die Veränderung der örtlichen Lage kann aber auch durch eine kontinuierliche Verschiebung des Verseilwerkzeugs in Längsrichtung des Verseilgutes erfolgen. In allen Fällen wird der bei einer bestimmten Position des Verseilwerkzeugs vorhandenen tangentialen Kraftkomponente eine zusätzliche tangentiale Kraftkomponente überlagert, die in Abhängigkeit von ihrem Vorzeichen zu einer Vergrößerung oder Verkleinerung der ursprünglichen tangentialen Kraftkomponente führt. Hierzu muß die Änderung der Schrägstellung der Umlenkrollen oder Umlenkwalzen in Abständen sprungartig erfolgen, während die Veränderung der örtlichen Lage der Umlenkrollen oder Umlenkwalzen gleichförmig abschnittsweise in der einen und in der anderen Richtung erfolgt.

Um mit dem neuen Verseilwerkzeug einen hinreichend großen Kraftschluß zwischen den Umlenkrollen bzw. Umlenkwalzen und dem Verseilgut zu erzeugen, empfiehlt es sich, wenn der Verseilkopf aus mehreren Umlenkrollen oder Umlenkwalzen besteht. Hierzu können beispielsweise wenigstens drei Umlenkrollen oder Umlenkwalzen mit Abstand zueinander und in wenigstens zwei verschiedenen Ebenen angeordnet sein. Das Verseilgut wird dann nacheinander zunächst um die eine, dann um die zweite und anschließend um die dritte Umlenkrolle oder Umlenkwalze herumgeführt bzw. von diesen umgelenkt. Diese Anordnung bietet die Möglichkeit, die Verseilstrecke im wesentlichen geradlinig auszugestalten.

Bei Anordnung mehrerer Umlenkrollen oder Umlenkwalzen in verschiedenen Ebenen können diese Ebenen parallel oder nichtparallel zueinander verlaufen. Die Anordnung in nichtparallelen Ebenen führt dazu, daß aufeinanderfolgende Umlenkrollen auf das Verseilgut eine unterschiedliche Torsion ausüben.

Eine besonders zweckmäßige, weil in verschiedener Richtung ausbaufähige Variante besteht aber darin, mehrere Umlenkrollen oder Umlenkwalzen auf einem Teilkreis anzuordnen, so daß das Verseilgut insgesamt über einen größeren Winkel umgelenkt wird. Besonders zweckmäßig ist es hierbei, wenn das Verseilgut auf den Umlenkrollen oder Umlenkwalzen des Verseilkopfes über einen Winkel von etwa 180° oder 360° aufliegt. Hierdurch ist die Möglichkeit gegeben, die SZ-Verseilstrecke parallel zu einer Isolierstrecke oder Wasserkühlstrecke oder parallel zu einer zweiten Verseilstufe anzuordnen. Weiterhin besteht die Möglichkeit, das Verseilgut in mehreren Windungen innerhalb der eigentlichen Verseileinrichtung zu führen und somit der Verseilstrecke eine möglichst große Speicherkapazität zu verleihen. Diese Möglichkeit ist insbesondere dann gegeben, wenn innerhalb der Verseilstrecke zwei Verseilköpfe vorgesehen sind, von denen der eine unmittelbar hinter dem ersten Verseilpunkt und der andere unmittelbar vor dem zweiten Verseilpunkt angeordnet ist.

Hinsichtlich der praktischen Ausgestaltung eines Verseilkopfes mit mehreren auf einem Kreisbogen angeordneten Umlenkrollen oder Umlenkwalzen empfiehlt es sich, die Umlenkrollen oder Umlenkwalzen auf einem zylindrischen Tragkörper anzuordnen. Dabei kann man derart vorgehen, daß die Umlenkrollen oder Umlenkwalzen in zwei die Lager enthaltenden Kreisringen gelagert sind, die entweder zur Veränderung der Schrägstellung der Achsen der Umlenkrollen oder Umlenkwalzen unabhängig voneinander verdrehbar sind oder die zur Veränderung der örtlichen Position der Umlenkrollen oder Umlenkwalzen gemeinsam um ihre Achse drehbar sind. Bei Verwendung von zwei Verseilköpfen innerhalb der Verseilstrecke kann man auch derart vorgehen, daß der Abstand der Verseilköpfe zueinander, gegebenenfalls gemeinsam mit den zugeordneten Verseilpunkten — im Sinne eines »atmenden Speichers« —, veränderbar ist.

Um bei Verwendung von zwei Verseilköpfen innerhalb der Verseilstrecke die Speicherkapazität der Verseilstrecke möglichst groß zu gestalten, empfiehlt es sich, daß das Verseilgut in mehreren Windungen wendelförmig auf den Verseilköpfen aufliegt. In diesem Fall sind die Umlenkrollen oder Umlenkwalzen besonders lang ausgebildet, damit auf einer Umlenkrolle oder Umlenkwalze jeweils mehrere Windungen nebeneinander angeordnet werden können. Ganz allgemein, speziell jedoch auch für diesen Fall, empfiehlt es sich dabei, die Umlenkrollen oder Umlenkwalzen konkav zu profilieren, so daß jede Windung in einem speziellen Profil der Umlenkrollen oder Umlenkwalzen geführt wird. Die konkave Profilierung der Umlenkrollen oder Umlenkwalzen begünstigt im übrigen die Umsetzung der tangentialen Kraftkomponente in die gewünschte Verdrehung des Verseilgutes.

Eine möglichst große Speicherkapazität der Verseilstrecke kann auch dahingehend ausgenutzt werden, daß ein einzelner Strang des Verseilgutes nicht mehrfach über zwei Verseilköpfe hinweggeführt wird, sondern daß innerhalb der Verseilstrecke mehrere Verseilgutstränge parallel zueinander behandelt werden, indem den Verseilköpfen mehrere jeweils parallel angeordnete erste und zweite Verseilpunkte bzw. Verseilnippel zur parallelen Zu- und Abführung mehrerer Verseilgutstränge zugeordnet sind.

Wenn im Interesse einer möglichst großen Speicherkapazität der Verseilstrecke diese aus zwei Verseilköpfen besteht, deren Abstand mehr als 10 m beträgt, so empfiehlt es sich, zwischen den beiden Verseilköpfen zusätzliche Verseilköpfe anzuordnen, mit denen die Drehbewegung des Verseilgutes im Bereich zwischen den Verseilköpfen aufrechterhalten wird. Hierzu können an sich um die Verseilachse rotierende Verseilköpfe verwendet werden; mit Rücksicht auf das der Erfindung zugrunde liegende Verseilprinzip empfehlen sich aber Verseilköpfe, die aus jeweils zwei Rollen oder Walzenpaaren bestehen, zwischen denen das Verseilgut hindurchläuft und deren Achsen gegenüber der Achse des Verseilgutes schräggestellt und in ihrer Schrägstellung veränderbar sind, insbesondere Verseilköpfe, wie sie in den deutschen Offenlegungsschriften DE-A-2 833 699 und DE-A-2 833 700 beschrieben sind. Insbesondere bei Verseilstrecken mit derart großer Speicherkapazität empfiehlt es sich mit Rücksicht auf die große Menge des gespeicherten Verseilgutes, daß eine oder mehrere der Umlenkrollen oder Umlenkwalzen der Verseilköpfe direkt oder über eine Schlupfkupplung antreibbar sind.

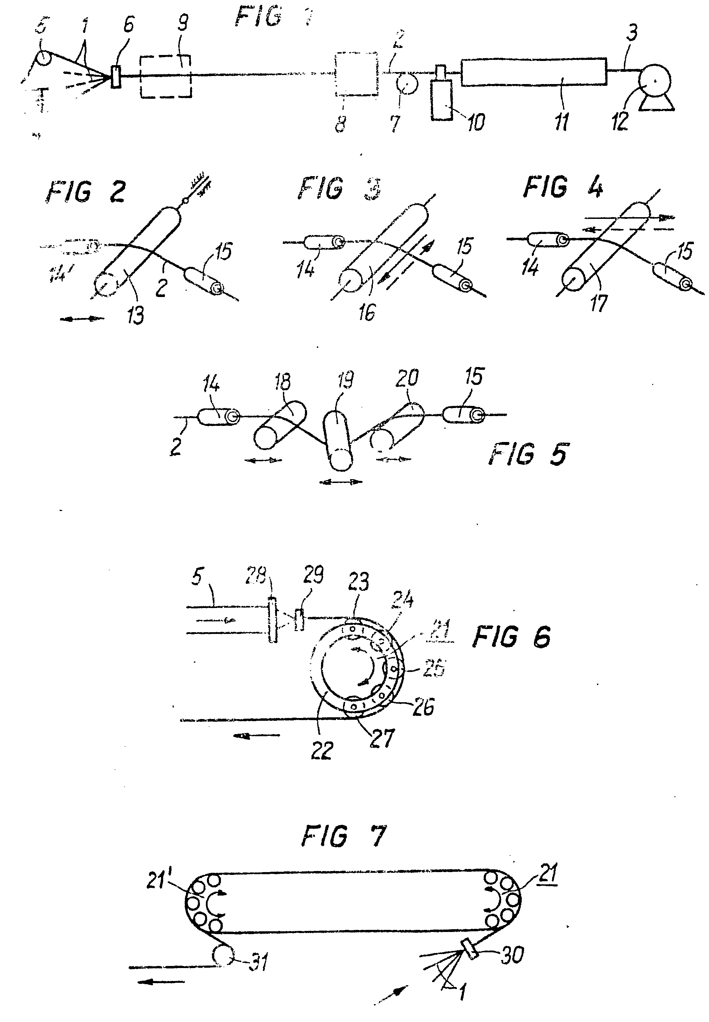

Ausführungsbeispiele der neuen Verseilvorrichtung sind in den Figuren 1 bis 12 schematisch dargestellt. Hierbei wird davon ausgegangen, daß der Fachmann mit der detaillierten konstruktiven Ausgestaltung einer entsprechenden Vorrichtung durch den einschlägigen Stand der Technik vertraut ist.

Fig. 1 zeigt eine Einrichtung zur SZ-Verseilung von vier Adern 1 zu einer Verseileinheit 2 und zum anschließenden Aufbringen einer äußeren Umhüllung mit Hilfe eines Extruders 10 und einer nachgeschalteten Wasserkühlstrecke 11 und somit zur Herstellung einer Leitung oder eines Kabels 3, das von der Abzug- und Aufwickeleinrichtung 12 aufgenommen wird.

Die eigentliche Einrichtung zur SZ-Verseilung der Adern besteht aus dem Verseilnippel 6, in den die Adern von Vorratseinrichtungen 4 über Umlenkrollen 5 einlaufen, aus dem zweiten Verseilpunkt in Form einer Umlenkrolle 7 und aus wenigstens einem unmittelbar vor dem zweiten Verseilpunkt angeordneten Verseilkopf 8. Gegebenenfalls ist zwischen den beiden Verseilpunkten ein zweiter Verseilkopf 9 unmittelbar hinter dem ersten Verseilpunkt angeordnet.

Der zur SZ-Verseilung vorgesehene Verseilkopf 8 bzw. jeder der beiden Verseilköpfe 8 und 9 besteht im einfachsten Fall gemäß den Darstellungen in den Figuren 2 bis 4 aus einer Umlenkrolle oder Umlenkwalze 13, deren Achse gegenüber der Führungsachse des Verseilgutes 2 schräggestellt ist. Vor und hinter der Umlenkrolle wird das Verseilgut mit Hilfe von Führungsnippeln 14 und 15 seitlich geführt.

Infolge der Schrägstellung der Achse der Umlenkrolle 13 gegenüber der Führungsachse des Verseilgutes wird bei einer Längsbewegung des Verseilgutes von der Umlenkrolle auf das Verseilgut eine Kraftkomponente quer zur Führungsrichtung des Verseilgutes ausgeübt, die — da das Verseilgut mittels der Führungsnippel 14/15 seitlich fixiert ist — zu einer Drehbewegung des Verseilgutes führt. Diese Querkomponente oder tangentiale Kraftkomponente kann dadurch variiert werden, daß man, wie in Fig. 2 dargestellt, die Schrägstellung der Achse der Umlenkrolle gegenüber der Führungsachse des Verseilgutes ändert oder, wie in Fig. 3 dargestellt, indem man die Umlenkrolle oder Umlenkwalze 16 in Achsrichtung hin- und herbewegt oder indem man gemäß Fig. 4 die örtliche Lage der Umlenkwalze 17 in Längsrichtung des Verseilgutes in der einen oder anderen oder abwechselnd in beiden Richtungen verändert. Anstelle der in Fig. 3 vorgesehenen seitlichen Verschiebung der Umlenkrolle kann bei feststehender Umlenkrolle auch eine seitliche Verschiebung des Verseilgutes in Betracht kommen.

Da mit einer einzigen Umlenkrolle oder Umlenkwalze relativ geringe Kräfte quer bzw. tangential zur Führungsachse des Verseilgutes ausgeübt werden, ist es zweckmäßig, wenn der Verseilkopf aus mehreren Umlenkrollen oder Umlenkwalzen besteht. Ein Ausführungsbeispiel hierfür zeigt Fig. 5, bei dem das Verseilgut nacheinander über drei mit Abstand zueinander angeordnete Umlenkrollen 18, 19, 20 geführt wird, wobei die Schrägstellung der Achsen der Umlenkrollen änderbar ist. Zur seitlichen Fixierung des Verseilgutes 5 sind hierbei dem Verseilkopf ebenfalls zwei Führungsnippel 14 und 15 zugeordnet.

Ein konstruktiv besonders einfaches und daher besonders zweckmäßiges Ausführungsbeispiel eines Verseilkopfes zeigt Fig. 6. Der Verseilkopf 21 besteht aus fünf Umlenkrollen 23 bis 27, die an beiden Enden mit ihren Achsen gemeinsam jeweils in einem Kreisring 22 gelagert sind. Der Verseilkopf als Ganzes ist stationär angeordnet. Einer oder beide Kreisringe werden jedoch in Zeitabständen, die für die SZ-Verseilung charakteristisch sind, derart um ihre Achse um einen bestimmten Winkel verdreht, daß die einzelnen Umlenkrollen ihre Winkelposition gegenüber dem über die Umlenkrollen geführten Verseilgut sprungweise ändern. Da hierbei nur sehr kleine Massen beschleunigt werden müssen, kann die Änderung der Winkelposition in sehr kurzer Zeit erfolgen. Bei dem in Fig. 6 dargestellten Verseilkopf werden die Verseilelemente dem Verseilkopf über die Lochscheibe 28 und den Verseilnippel 29 zugeführt.

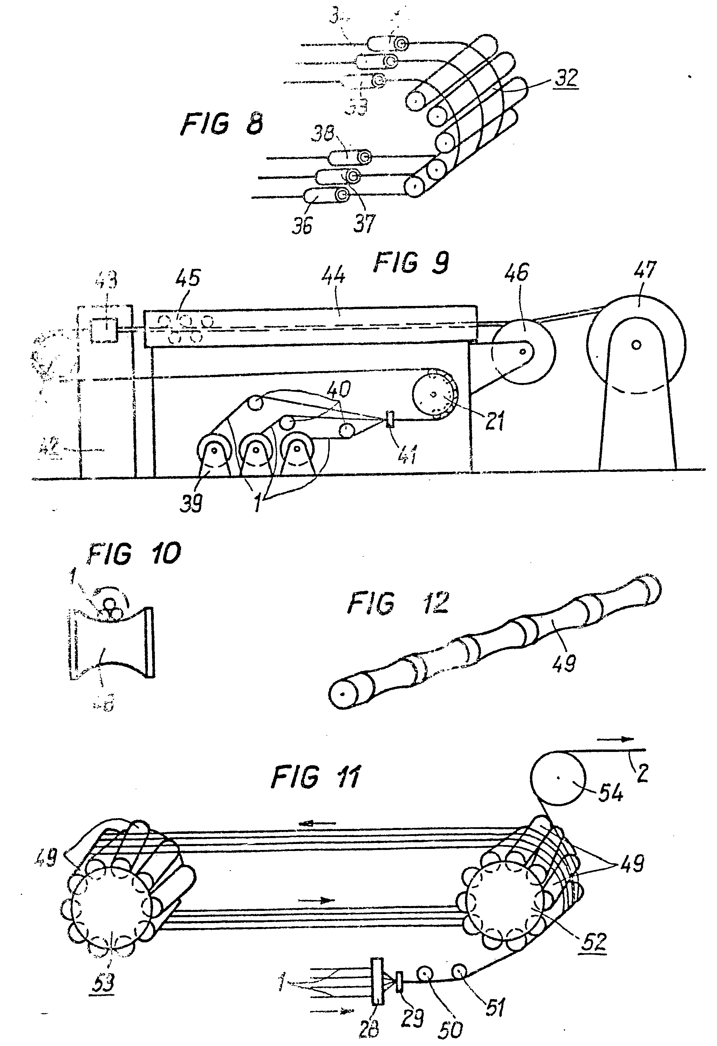

Zwei gemäß Fig. 6 ausgebildete Verseilköpfe 21 können auch gemeinsam eine SZ-Verseilvorrichtung bilden, wobei der eine Verseilkopf am Eingang und der andere am Ausgang der SZ-Verseilvorrichtung angeordnet ist. Ein Ausführungsbeispiel hierfür zeigt Fig. 7, bei dem die Adern 1 dem Verseilkopf 21 über den Verseilnippel 30 zugeführt werden und bei dem das Verseilgut den Verseilkopf 21' über die den zweiten Verseilpunkt bildende Umlenkrolle 31 verläßt. Bei einer derartigen Ausgestaltung einer SZ-Verseilvorrichtung besteht insbesondere die Möglichkeit, daß das Verseilgut in mehreren Windungen innerhalb der SZ-Verseileinrichtung geführt wird, womit bei begrenzter Baulänge der SZ-Verseilvorrichtung relativ große Speicherlängen realisiert werden können. Hierbei kann man derart vorgehen, daß für jede Umlenkung des Verseilgutes um 180° innerhalb des Speichers getrennte Führungsrollen und somit getrennte Verseilköpfe vorgesehen werden; besonders zweckmäßig ist es jedoch, die Windungen des Verseilgutes stets über denselben Verseilkopf zu führen, wie es in Fig. 8 schematisch für den Verseilkopf 32 dargestellt ist. Führungsnippel 33 bis 35 bzw. 36 bis 38 sorgen dafür, daß die parallelen Stränge des Verseilgutes im Stillstand der Maschine nicht durcheinanderfallen. Mit geringem baulichem Aufwand lassen sich so in mehreren Schleifen Speicherlängen von einigen 100 m erzielen. In ähnlicher Weise ist es möglich, mit Hilfe von zwei Verseilköpfen gemäß Fig. 7 mehrere verschiedene Stränge von Verseilgut parallel zu verseilen.

Durch eine geeignete Ausgestaltung der Umlenkrollen oder Umlenkwalzen kann der durch die Schrägstellung der Umlenkrollen oder Umlenkwalzen erzielte Verseileffekt unterstützt werden. Ausführungsbeispiele hierfür zeigen die Figuren 10 und 12. In Fig. 10 ist eine Umlenkrolle 48 dargestellt, die konkav profiliert bzw. verjüngt ist. Dadurch wird der Wälzvorgang der Adern 1 auf der Umlenkrolle begünstigt. Fig. 12 zeigt eine Umlenkwalze 49, die zur Führung mehrerer Windungen desselben Verseilgutes bzw. mehrerer Windungen verschiedener Verseilgutstränge vorgesehen ist und nebeneinander mehrere konkave Verjüngungen aufweist.

Die in Fig. 9 dargestellte Vorrichtung dient zur SZ-Verseilung von drei Adern 1 zu einer Verseileinheit und zur anschließenden Ummantelung der SZ-verseilten Adern. Die Adern 1 laufen hierzu von Vorratseinrichtungen 39 ab und werden über Hysteresebremsen 40, mit denen eine gleichmäßige Abbremsung der Adern erfolgt, dem Verseilnippel 41 zugeführt. Von dort laufen sie auf die Umlenkrollen des Verseilkopfes 21 auf, der von dem Verseilgut um etwa 180° umschlungen wird. Ein zweiter Verseilkopf 21' ist unmittelbar vor dem Extruder 42 angeordnet, in dessen Spritzkopf 43 die miteinander verseilten Adern ummantelt werden. An den Extruder schließt sich die Wasserkühlstrecke 44 an, in deren Eingangsbereich eine Torsionssperre 45 angeordnet ist, die den zweiten Verseilpunkt für den Verseilkopf 21' bildet. Am Ende der Wasserkühlstrecke ist die Abzugeinrichtung 46 angeordnet, der die Aufwickeleinrichtung 47 nachgeschaltet ist.

Bei den Verseilköpfen 21 und 21' handelt es sich um nichtrotierende Schräg-Rollen-Twister, die jeweils fünf schräg zur Abzugrichtung des Verseilgutes angebrachte kleine Führungsrollen oder Führungswalzen enthalten. Diese können mittels einer entsprechenden Lagerscheibe gemeinsam in ihrer Winkelposition zwischen zwei festen Werten geändert werden. Dies kann beispielsweise durch einen Elektromagneten erfolgen, dessen Erregung in Abhängigkeit von der Durchlaufzeit des Verseilgutes vom Verseilkopf 21 zum Verseilkopf 21' an- und abgeschaltet wird.

Die Umlenkrollen der Verseilköpfe 21 und 21' haben eine konkave Form und sind nicht angetrieben. Durch die von der Abzugeinrichtung 46 aufgebrachten und den Hysteresebremsen 40 aufgenommenen Zugkräfte ergibt sich ein Anpreßdruck der Adern 1 auf den schräggestellten Führungsrollen der Verseilköpfe. Anpreßdruck und Schrägstellung der Umlenkrollen bewirken eine Querbewegung der Adern auf den von den Adern mitgenommenen Umlenkrollen. Die konkave Form der Umlenkrollen sorgt dafür, daß die jeweils an einem Flansch liegende Ader über die mittlere Ader hinwegkippt und sich die Adern so fortlaufend umschlingen. Beim Durchlaufen des stationären Verseilkopfes 21 bzw. 21' werden die Adern deshalb ebenso verteilt, wie es mit Hilfe eines rotierenden Verseilkopfes bekannter Bauart geschehen würde.

Der Winkel, den die Achsen der Umlenkrollen mit der Führungsachse des Verseilgutes einschließen, ist stets größer bzw. kleiner als 90°. Damit ist gewährleistet, daß die Adern 1, wenn sie auf den Verseilkopf 21 auflaufen, stets miteinander in der gleichen Richtung verseilt sind.

Nach Verlassen des Verseilkopfes 21 läuft das Verseilgut beispielsweise über eine Strecke von 10 m frei durch die Luft und gelangt schließlich zu dem zweiten Verseilkopf 21', der baugleich mit dem Verseilkopf 21 ist. Die Umlenkrollen des Verseilkopfes 21 sind synchron mit den Umlenkrollen des Verseilkopfes 21' in ihrer Winkellage verstellbar. Der Torsionszustand des Verseilgutes bleibt demnach zwischen den beiden Verseilköpfen unverändert.

Das in Fig. 11 dargestellte Ausführungsbeispiel einer SZ-Verseilvorrichtung dient ebenfalls zur Verseilung von Adern 1 zu einer Verseileinheit 2. Die Adern werden hierzu über eine Lochscheibe 28 einem ersten Verseilnippel 29 zugeführt und von dort über Führungsrollen 50 und 51 den beiden Verseilköpfen 53 und 53. Nach Verlassen der Verseilköpfe wird das Verseilgut über die Umlenkscheibe 54 geführt, die gleichzeitig den zweiten Verseilpunkt darstellt.

Die Verseilköpfe 52 und 53 bestehen ebenfalls aus mehreren Umlenkwalzen 49, die in diesem Ausführungsbeispiel über den ganzen Umfang eines Tragkörpers verteilt angeordnet sind. Der käfigartige Tragkörper führt eine Drehbewegung um seine eigene Achse aus, die nach Größe und/oder Richtung in Abständen geändert wird. Dies bedeutet, daß die Umlenkwalzen 49 abschnittsweise ihre örtliche Position gegenüber dem Verseilgut in Längsrichtung verändern. Hierbei können die käfigartigen Tragkörper mit stets gleichbleibender Drehrichtung, aber wechselnder Drehzahl umlaufen, wobei die eine Drehzahl auch Null sein kann, sie können aber auch die Drehrichtung wechseln. Wenn die Drehbewegung der Verseilköpfe in Abzugrichtung des Verseilgutes erfolgt, muß jedoch gewährleistet sein, daß die Umfangsgeschwindigkeit der Verseilköpfe stets kleiner als die Abzugsgeschwindigkeit des Verseilgutes ist, damit sich innerhalb der SZ-Verseileinrichtung keine Umkehrstellen der Drallrichtung im Verseilgut ergeben.

Bei den anhand der Figuren 7, 9 und 11 beschriebenen Ausführungsbeispielen, bei denen die SZ-Verseileinrichtung jeweils zwei Verseilköpfe enthält, kann die zur SZ-Verseilung notwendige Änderung der Verdrillung des Verseilgutes auch dadurch erreicht werden, daß man den gegenseitigen Abstand der beiden Verseilköpfe und gegebenenfalls der zugeordneten Verseilnippel und Führungseinrichtungen in Abständen kontinuierlich verkleinert und vergrößert.

Die beschriebenen Verseilwerkzeuge und Verseileinrichtungen können in gleicher Weise zur SZ-Vortorsion einer einzelnen Ader eingesetzt werden, wie es bei der Verseilung von Adern für Nachrichtenkabel üblich ist, wenn der jeweiligen Vorrichtung anstelle mehrerer Adern nur eine einzelne Ader zugeführt wird.

## Patentansprüche

1. Vorrichtung zum SZ-Verseilen von Verseilelementen (1) elektrischer oder optischer Kabel und Leitungen, bestehend aus raumfest angeordneten Vorratseinrichtungen (4, 9) für die Verseilelemente, aus einer Verseileinrichtung und aus einer Abzug- und Aufwickeleinrichtung (12), bei der als Verseileinrichtung eine Verseilstrecke vorgesehen ist, die aus einem ersten (6) und einem zweiten (7) Verseilpunkt/Verseilnippel und wenigstens einem zwischen den beiden Verseilpunkten angeordneten Verseilkopf (8) besteht, der die zu einem Strang zusammengefaßten Verseilelemente erfaßt und verdreht, dadurch gekennzeichnet, daß der Verseilkopf (8) aus wenigstens einer um ihre Achse drehbaren Umlenkrolle (13, 16, 17) oder Umlenkwalze besteht, die in Umfangsrichtung des Verseilgutes nicht rotiert und an der das Verseilgut wenigstens über einen Teil des Umfangs anliegt und deren Achse gegenüber der Achse des gestreckt geführten Verseilgutes schräggestellt ist und mit dieser einen spitzen Winkel $\alpha$ einschließt, und daß entweder die Schrägstellung der Achse der Umlenkrolle oder Umlenkwalze in einem Winkelbereich von 0 bis 90° in Abständen änderbar ist oder die örtliche Lage der Umlenkrolle oder Umlenkwalze zum Verseilgut bzw. die örtliche Lage des Verseilgutes zur Umlenkrolle in oder quer zur Führungsachse des Verseilgutes abschnittsweise änderbar ist.

2. Vorrichtung nach Anspruch 1, dadurch gekennzeichnet, daß der Verseilkopf aus wenigstens drei mit Abstand zueinander angeordneten Umlenkrollen oder Umlenkwalzen (18, 19, 20) besteht, die in wenigstens zwei verschiedenen Ebenen angeordnet sind.

3. Vorrichtung nach Anspruch 2, dadurch gekennzeichnet, daß alle Umlenkrollen oder Umlenkwalzen (23–27) auf einem Teilkreis angeordnet sind.

4. Vorrichtung nach Anspruch 3, dadurch gekennzeichnet, daß das Verseilgut auf den Umlenkrollen oder Umlenkwalzen des Verseilkopfes über einen Winkel von etwa 180° oder 360° aufliegt.

5. Vorrichtung nach Anspruch 3 oder 4, dadurch gekennzeichnet, daß die Umlenkrollen oder Umlenkwalzen (23–27) auf einem zylindrischen Tragkörper (22) angeordnet sind.

6. Vorrichtung nach Anspruch 5, dadurch gekennzeichnet, daß der Tragkörper (52, 53) um seine Achse mit wechselnder Drehzahl drehbar ist.

7. Vorrichtung nach einem der Ansprüche 1 bis 6, dadurch gekennzeichnet, daß jedem Verseilkopf ein- oder beidseitig ein Führungsnippel (14, 15) für das Verseilgut zugeordnet ist.

8. Vorrichtung nach einem der Ansprüche 4 bis 7 mit zwei Verseilköpfen, dadurch gekennzeichnet, daß das Verseilgut in mehreren Windungen wendelförmig auf den Verseilköpfen aufliegt (Fig. 8, Fig. 11).

9. Vorrichtung nach einem der Ansprüche 4 bis 8 mit zwei Verseilköpfen, dadurch gekennzeichnet, daß der Abstand der Verseilköpfe zueinander veränderbar ist.

10. Vorrichtung nach einem der Ansprüche 1 bis 9, dadurch gekennzeichnet, daß die Umlenkrollen (48) oder Umlenkwalzen (49) ein- oder mehrfach konkav profiliert sind.

11. Vorrichtung nach einem der Ansprüche 1 bis 10 mit zwei Verseilköpfen, dadurch gekennzeichnet, daß dem oder den Verseilköpfen mehrere jeweils parallel angeordnete erste und zweite Verseilpunkte/Verseilnippel zum parallelen Zu- und Abführen mehrerer Verseilgutstränge zugeordnet sind.

12. Vorrichtung nach Anspruch 9 oder 11 mit zwei Verseilköpfen, deren Abstand mehr als 10 m beträgt, dadurch gekennzeichnet, daß zwischen den beiden Verseilköpfen zusätzliche Verseilköpfe zur Aufrechterhaltung der Drehbewegung des Verseilgutes angeordnet sind.

13. Vorrichtung nach einem der Ansprüche 1 bis 12, dadurch gekennzeichnet, daß eine oder mehrere der Umlenkrollen oder Umlenkwalzen eines Verseilkopfes direkt oder über eine Schlupfkupplung antreibbar sind.

14. Verwendung einer Vorrichtung nach einem der Ansprüche 1 bis 13 zur SZ-Vortorsion einer oder mehrerer Adern für Nachrichtenkabel.

**Claims**

1. Apparatus for the SZ-stranding of stranding elements (1) of electrical or optical cables and lines, consisting of stationary feed devices (4, 9) for the stranding elements, a stranding device, and a draw-off and coiling-up device (12), in which the stranding device consists of a stranding section which is made up of a first (6) and a second (7) stranding point/stranding nipple and at least one stranding head (8) which is arranged between the two stranding points and which picks up and twists the strand elements which are combined to form a strand, characterised in that the stranding head (8) consists of at least one deflector pulley (13, 16, 17) or deflector roll which is rotatable about its axis, does not rotate in the peripheral direction of the goods to be stranded an contacts the goods to be stranded over at least a part of the periphery and the axis of which is inclined relative to the axis of the extended goods to be stranded and makes an acute angle α with the latter, and that either the inclination of the axis of the deflector pulley or deflector roll can be varied stepwise over an angular range of from 0 to 90°, or the local position of the deflector pulley or deflector roll with respect to the goods to be stranded, or the local position of the goods to be stranded with respect to the deflector pulley or roll in or transverse to the feed axis of the goods to be stranded, can be varied in a stepwise manner.

2. Apparatus as claimed in Claim 1, characterised in that the stranding head consists of at least three deflector pulleys or deflector rolls (18, 19, 20) which are spaced from one another and are arranged in at least two different planes.

3. Apparatus as claimed in Claim 2, characterised in that all the deflector pulleys or rolls (23 – 27) are arranged on a pitch circle.

4. Apparatus as claimed in Claim 3, characterised in that the goods to be stranded rest against the deflector pulleys or rolls of the stranding head through an angle of about 180° or 360°.

5. Apparatus as claimed in Claim 3 or Claim 4, characterised in that the deflector pulleys or rolls (23 – 27) are arranged on a cylindrical carrier body (22).

6. Apparatus as claimed in Claim 5, characterised in that the carrier body (52, 53) can be rotated about its axis at varying speeds.

7. Apparatus as claimed in one of Claims 1 to 6, characterised in that a guide nipple (14, 15) for the goods to be stranded is assigned to each stranding head, on one or both sides thereof.

8. Apparatus as claimed in one of Claims 4 to 7 having two stranding heads, characterised in that the goods to be stranded rest on the stranding heads in the form of a coil with a plurality of turns (Fig. 8, Fig. 11).

9. Apparatus as claimed in one of Claims 4 to 8 having two stranding heads, characterised in that the distance of the stranding heads from one another can be varied.

10. Apparatus as claimed in one of Claims 1 to 9, characterised in that the deflector pulleys (48) or deflector rolls (49) are profiled to have one or more concave sections.

11. Apparatus as claimed in one of Claims 1 to 10 having two stranding heads, characterised in that to one or both stranding heads is or are assigned a plurality of first and second stranding points/stranding nipples which are arranged in parallel and serve for the parallel supply and withdrawal of a plurality of strands of goods to be stranded.

12. Apparatus as claimed in Claim 9 or Claim 11 having two stranding heads, spaced at a distance apart of more than 10 m, characterised in that additional stranding heads are arranged between the two stranding heads in order to maintain the rotary movement of the goods to be stranded.

13. Apparatus as claimed in one of Claims 1 to 12, characterised in that one or more of the deflector pulleys or rolls of a stranding head can be driven directly or via a slip coupling.

14. The use of apparatus as claimed in one of Claims 1 to 13 for the SZ-pretwisting of one or more wires for communications cables.

## Revendications

1. Dispositif pour le câblage SZ d'éléments d'assemblage (1) de câbles et conducteurs électriques ou optiques, constitué par des installations de dévidage (4, 9) fixes dans l'espace pour les éléments d'assemblage, par une installation de câblage ou câbleuse et par une installation de tirage et d'enroulement dans lequel il est prévu, comme câbleuse, une section de câblage qui est constituée par un premier (6) et un second (7) points de câblage/filières de câblage et au moins une tête de câblage (8) disposée entre les deux points de câblage et qui saisit et tord les éléments de câblage assemblés en un cordon, caractérisé par le fait que la tête de câblage (8) est constituée par au moins un galet ou rouleau de renvoi (13, 16, 17) tournant sur on axe, qui ne tourne pas dans la direction périphérique du produit de câblage et sur au moins une partie de la périphérie duquel porte le produit de câblage, l'axe dudit galet ou dudit rouleau étant incliné par rapport à l'axe du produit de câblage tendu selon un angle aigu α, et que soit l'obliquité de l'axe du galet de renvoi ou du rouleau de renvoi est modifiable de temps à autre dans une plage angulaire de 0 à 90°, soit la position locale du galet ou du rouleau de renvoi par rapport au produit de câblage ou la position locale du produit de câblage par rapport au galet de renvoi est modifiable par section dans le sens de l'axe de guidage du produit câblé ou transversalement à cet axe.

2. Dispositif selon la revendication 1, caractérisé par le fait que la tête de câblage est constituée par au moins trois galets ou rouleaux de renvoi (18, 19, 20) espacés les uns des autres et disposés dans au moins deux plans différents.

3. Dispositif selon la revendication 2, caractérisé par le fait que tous les galets ou rouleaux de renvoi (23 – 27) sont disposés sur un arc-de-cercle.

4. Dispositif selon la revendication 3, caractérisé par le fait que le produit de câblage entoure les galets ou rouleaux de renvoi sur un angle d'environ 180 ou 360°.

5. Dispositif selon la revendication 3 ou 4, caractérisé par le fait que les galets ou rouleaux de renvoi (23 – 27) sont disposés sur un corps de support cylindrique (22).

6. Dispositif selon la revendication 5, caractérisé par le fait que le corps de support (52, 53) est susceptible de tourner sur son axe à une vitesse de rotation variable.

7. Dispositif selon l'une des revendications 1 à 6, caractérisé par le fait qu'à chaque tête de câblage est associée, sur un ou sur ses deux côtés, une filière de câblage (14, 15) pour le produit de câblage.

8. Dispositif selon l'une des revendications 4 à 7 à deux têtes de câblage, caractérisé par le fait que le produit de câblage repose sur les têtes de câblage hélicoïdalement et avec plusieurs spires (figure 8, figure 11).

9. Dispositif selon l'une des revendications 4 à 8 à deux têtes de câblage, caractérisé par le fait que la distance entre les têtes de câblage est modifiable.

10. Dispositif selon l'une des revendications 1 à 9, caractérisé par le fait que les galets (18) ou les rouleaux de renvoi (49) présentent un ou plusieurs profils concaves.

11. Dispositif selon l'une des revendications 1 à 10 à deux têtes de câblage, caractérisé par le fait qu'à la tête ou qu'aux têtes de câblage sont associés plusieurs premiers et seconds points de câblage/filières de câblage respectivement parallèles entre eux, pour amener ou évacuer plusieurs cordons du produit de câblage.

12. Dispositif selon la revendication 9 ou 11, à deux têtes de câblage distantes de plus de 10 mètres, caractérisé par le fait qu'entre les deux têtes de câblage sont disposées des têtes de câblage supplémentaires pour entretenir le mouvement de rotation du produit de câblage.

13. Dispositif selon l'une des revendications 1 à 12, caractérisé par le fait qu'un ou plusieurs galets ou rouleaux de renvoi d'une tête sont susceptibles d'être entraînés directement ou par l'intermédiaire d'un accouplement à glissement.

14. Mise en oeuvre d'un dispositif selon l'une des revendications 1 à 13 pour la torsion SZ préalable d'un ou de plusieurs conducteurs pour un câble de télécommunications.

FIG 1

FIG 2   FIG 3   FIG 4

FIG 5

FIG 6

FIG 7

0 007 472

FIG 8

FIG 9

FIG 10

FIG 12

FIG 11